# EUROPÄISCHE PATENTANMELDUNG

(11) **EP 2 200 047 A1**
(43) Veröffentlichungstag der Anmeldung: **23.06.2010**
(21) Anmeldenummer: 08291197.5
(22) Anmeldetag: 16.12.2008
(51) Int. Cl.: H01B 12/02

(54) **Anordnung mit einem dreiphasigen supraleitfähigen Kabel**

(71) Anmelder: Nexans, 75008 Paris (FR)
(72) Erfinder: Soika, Rainer, Dr., 30559 Hannover (DE); Stemmle, Mark, Dipl.-Ing., 30161 Hannover (DE)
(74) Vertreter: Döring, Roger

(57) **Zusammenfassung**

Es wird eine Anordnung mit einem dreiphasigen supraleitfähigen Kabel angegeben, dessen drei Phasen (P1, P2, P3) unter Einschluß eines Freiraums (FR) zum Durchleiten eines Kühlmittels in einem Kryostat (KR) angeordnet sind. Der Kryostat (KR) besteht aus zwei koaxial zueinander verlaufenden metallischen Rohren (1,2), zwischen denen eine Vakuumisolierung (3) angebracht ist. Jede der drei Phasen (P1,P2,P3) des Kabels besteht aus einem sektorförmigen supraleitfählgen Leiter (4) mit einem Sektorwinkel von 120°, um den eine bei den tiefen Temperaturen des Kühlmittels beständige Isolierung (5) angebracht ist, und die drei Phasen (P1,P2,P3) sind zu einem im wesentlichen kreisrunden Gebilde zusammengefügt.

## Beschreibung

Die Erfindung bezieht sich auf eine Anordnung mit einem dreiphasigen supraleitfähigen Kabel, dessen drei Phasen unter Einschluß eines Freiraums zum Durchleiten eines Kühlmittels in einem Kryostat angeordnet sind, der aus zwei koaxial zueinander verlaufenden metallischen Rohren besteht, zwischen denen eine Vakuumisolierung angebracht ist.

Die supraleitfähigen Leiter und auch Schirme von supraleitfähigen Kabeln bestehen in heutiger Technik aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materialien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Eine Anordnung mit einem dreiphasigen supraleitfähigen Kabel wie sie eingangs beschrieben ist, geht beispielsweise aus der US 2004/0256126 A1 hervor. Jede der drei in einem Kryostat angeordneten Phasen besteht aus einem aus Kupferdrähten aufgebauten Träger, um den ein als Band vorliegender supraleitfähiger Leiter wendelförmig herumgewickelt ist. Über dem Leiter ist ein Dielektrikum angeordnet, das von einem supraleitfähigen Schirm umgeben ist. Der Schirm kann ebenso aufgebaut sein wie der Leiter. Jede der drei Phasen ist mit entsprechendem Aufwand als eigenständiges, mit einem elektrischen Schirm aufgebautes Kabel ausgeführt.

Eine ähnliche Anordnung mit einem in einem Kryostat angeordneten dreiphasigen supraleitfähigen Kabel geht aus der WO 2004/013868 A2 hervor. In dieser Schrift ist auch ein dreiphasiges Kabel angegeben, bei dem die drei Phasen unter Zwischenschaltung von Isolierungen koaxial zueinander angeordnet sind. Über dem supraleitfähigen Leiter der außen liegenden Phase sind eine Isolierschicht und ein Kupferschirm angeordnet. Dieses supraleitfähige Kabel ist kompakt aufgebaut. Die drei Phasen sind jedoch unsymmetrisch zueinander angeordnet, wodurch die elektrischen Eigenschaften des Kabels ungünstig beeinflußt werden. Außerdem wirkt sich die Kühlung eines durch den Kryostat geleiteten Kühlmittels unterschiedlich auf die drei Phasen aus.

Der Erfindung liegt die Aufgabe zugrunde, die eingangs geschilderte Anordnung einfacher zu gestalten.

Diese Aufgabe wird gemäß der Erfindung dadurch gelöst,
- daß jede der drei Phasen des Kabels aus einem sektorförmigen supraleitfähigen Leiter mit einem Sektorwinkel von 120° besteht, um den eine bei den tiefen Temperaturen des Kühlmittels beständige Isolierung angebracht ist, und
- daß die drei Phasen zu einem im wesentlichen kreisrunden Gebilde zusammengefügt sind.

Das Kabel dieser Anordnung besteht aus drei, als supraleitfähige Leiter mit sektorförmigem Querschnitt ausgeführten Phasen, die jeweils von einer bei den durch das Kühlmittel erzeugten niedrigen Temperaturen beständigen Isolierung umgeben sind. Die drei Phasen sind identisch aufgebaut. Sie können bei einer Endlosfertigung in geeigneter Länge von einem Strang abgetrennt und zu einem kompakten Gebilde mit im wesentlichen kreisförmigem Querschnitt zusammengefügt werden. Die drei Phasen liegen dann dicht an dicht, so daß sie zusammen einen minimierten Platzbedarf in Kryostat haben. Die Abmessungen des Kryostats können daher verringert werden. Die drei Phasen sind außerdem symmetrisch zueinander angeordnet, so daß das Kabel optimale elektrische Eigenschaften hat. Darüberhinaus werden die drei Phasen gleichmäßig vom Kühlmittel umströmt, so daß sie auf die gleiche Temperatur abgekühlt werden.

Die drei Phasen werden zur Herstellung des Kabels mit Vorteil miteinander verseilt. Wenn in einer vorteilhaften Ausgestaltung der Anordnung ein zentrales Rohr zum Durchleiten eines Kühlmittels im Kryostat angebracht ist, dann können die drei Phasen um ein solches Rohr herum verseilt werden.

Ausführungsbeispiele des Erfindungsgegenstandes sind in den Zeichnungen dargestellt.

Es zeigen:
Fig. 1 in schematischer Darstellung einen Querschnitt einer Anordnung nach der Erfindung.
Fig. 2 die Anordnung nach Fig. 1 mit einer Ergänzung.

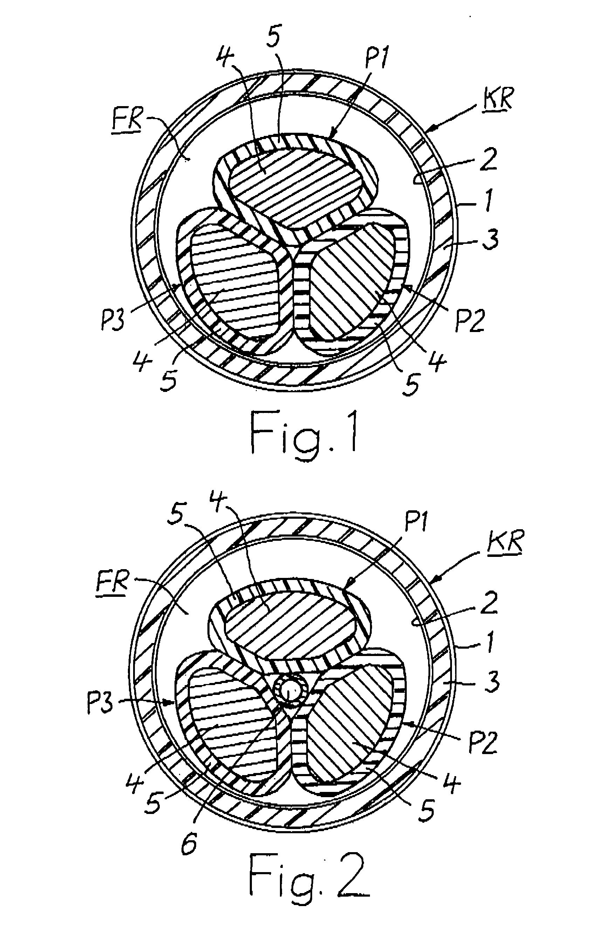

In Fig. 1 ist ein Kryostat KR gezeigt, der aus zwei konzentrisch zueinander angeordneten metallischen Rohren 1 und 2 besteht, zwischen denen eine Vokuumisolierung 3 angeordnet ist. Die Rohre 1 und 2 bestehen mit Vorteil aus Edelstahl und sind in bevorzugter Ausführungsform quer zu ihrer Längsrichtung gewellt.

Der Kryostat KR umschließt drei Phasen P1, P2 und P3 eines supraleitfähigen Kabels sowie einen Freiraum FR zum Durchleiten eines Kühlmittels. Jede der Phasen P1, P2 und P3 besteht aus einem sektorförmigen, sich über 120° erstreckenden supraleitfähigen Leiter 4. Der Leiter 4 der drei Phasen P1, P2 und P3 ist mit Vorteil in Form eines Leiterseils aus einer Vielzahl von supraleitfählgen Drähten aufgebaut, die beispielsweise alls kreisrunde Drähte gemäß EP 1 916 720 A1 ausgeführt sein können. Jeder der Leiter 4 ist von einer Isolierung 5 umgeben, die bei den tiefen Temperaturen des Kühlmittels beständig ist. Sie besteht beispielsweise aus Papier oder aus mit Polypropylen beschichtetem Papier, das in Bandform in mehreren Lagen um den jeweiligen Leiter 4 herumgewickelt ist.

Die drei Phasen P1, P2 und P3 des supraleitfähigen Kabels sind dicht an dicht liegend zu einem etwa kreisförmigen Gebilde zusammengefügt. Sie werden zur Herstellung des supraleitfähigen Kabels vorzugsweise miteinander verseilt. Das Kabel kann dann als einteiliges Gebilde in den Kryostat KR eingezogen werden. Im Kryostat KR verbleibt ein ausreichend großer Freiraum FR zum Durchleiten des Kühlmittels. Zum Freiraum FR tragen auch die freibleibenden, außen liegenden Zwickel zwischen den drei Phasen P1, P2 und P3 sowie ein im Zentrum derselben verbleibender Kanal bei.

Die Rundumkühlung der drei Phasen P1, P2 und P3 kann durch ein metallisches Rohr 6 verbessert werden, das gemäß Fig. 2 zentral zwischen denselben angeordnet ist. Es dient zum Durchleiten eines Kühlmittels, bei dem es sich um das gleiche Kühlmittel handeln kann, das auch durch den Freiraum FR geleitet wird. Bei der Herstellung des supraleitfähigen Kabels werden die drei Phasen P1, P2 und P3 mit Vorteil um das Rohr 6 herum verseilt. Die Formgebung der drei Phasen P1, P2 und P3 ist bei dieser Ausführungsform des Kabels so angepaßt, daß ein ausreichend großer Raum zur Aufnahme des Rohres 6 entsteht.

## Patentansprüche

1. Anordnung mit einem dreiphasigen supraleitfähigen Kabel, dessen drei Phasen unter Einschluß eines Freiraums zum Durchleiten eines Kühlmittels in einem Kryostat angeordnet sind, der aus zwei koaxial zueinander verlaufenden metallischen Rohren besteht, zwischen denen eine Vakuumisolierung angebracht ist, **dadurch gekennzeichnet,**
- **daß** jede der drei Phasen (P1,P2,P3) des Kabels aus einem sektorförmigen supraleitfähigen Leiter (4) mit einem Sektorwinkel von 120° besteht, um den eine bei den tiefen Temperaturen des Kühlmittels beständig Isolierung (5) angebracht ist, und
- daß die drei Phasen (P 1,P2,P3) zu einem im wesentlichen kreisrunden Gebilde zusammengefügt sind.

2. Anordnung nach Anspruch 1, **dadurch gekennzeichnet, daß** die drei Phasen (P1,P2,P3) des Kabels miteinander verseilt sind.

3. Anordnung nach Anspruch 1 oder 2, **dadurch gekennzeichnet, daß** zentral zwischen den drei Phasen (P1,P2,P3) ein Rohr (6) zum Durchleiten eines Kühlmittels angeordnet ist.

4. Anordnung nach einem der Ansprüche 1 bis 3, **dadurch gekennzeichnet, daß** die Leiter (4) der drei Phasen (P1,P2,P3) als aus supraleitfähigen Drähten aufgebaute Leiterseile ausgeführt sind.
